# EUROPEAN PATENT APPLICATION

(11) **EP 1 487 136 A2**
(43) Date of publication of application: **15.12.2004**
(21) Application number: 04076663.6
(22) Date of filing: 04.06.2004
(51) Int. Cl.: H04B 10/10

(54) **Asymmetric broadband optical wireless network**

(30) Priority: 13.06.2003 US 461031
(71) Applicant: Delphi Technologies, Inc., Troy, MI 48007 (US)
(72) Inventor: Bolduc, Timothy D., Westfield Indiana 46074 (US); Hedges, Christopher A., Greentown Indiana 46936 (US)
(74) Representative: Denton, Michael John

(57) **Abstract**

The present invention involves a method and system for transmitting data in an optical or hybrid optical and RF wireless network from a base structure (10, 110, 111) including a base apparatus (120) to a target device including a target apparatus (140). The base apparatus includes a base receiver (122), a laser (126), a device for positioning a laser-emitted beam (128), and a base microprocessor (124). The target apparatus includes a target transmitter (142), a photodetector (146), and a target microprocessor (144). Once the target device comes to a rest beneath the base structure, the target transmitter communicates the presence of the target apparatus to the base receiver. A communication uplink is established between the target apparatus and the base apparatus. The base microprocessor then activates the laser and instructs a commercial laser based steering system to continually adjust the position of the laser beam in a search pattern until it illuminates the photodetector, at which time a communication downlink is established between the base apparatus and target apparatus. Data is then transmitted from the laser to the photodetector via the communication downlink at speeds of 100 Mbps to 10Gbps.

## Description

### TECHNICAL BACKGROUND

The invention relates to transmitting data over a network. More specifically, the field of the invention is data transmission over an optical or hybrid RF and optical wireless network.

### BACKGROUND OF THE INVENTION

In the world of information technology, the concept of transferring greater amounts of data in a speedier fashion is a perpetual goal. Whereas only up to a few years ago a major decision to be made when setting up a network was whether to use copper wire or coaxial cable, the decision now is whether to use a physical medium with the availability of multiple existing wireless technologies capable of transferring data.

Several short range wireless radio-frequency ("RF") technologies exist today in order to promote wireless data transfer between devices such as personal computers (PCs), personal digital assistants ("PDAs") and vehicles. The most notable of these technologies include 802.11, Bluetooth and Home RF.

802.11 is a family of specifications for wireless local area networks ("WLANS") developed by the Institute of Electrical and Electronics Engineers ("IEEE"). The family of specifications includes 802.11, 802.11a, 802.11b, and 802.11g. The most recent specification, 802.11g, provides wireless transmission over short distances at up to fifty-four (54) megabits per second (Mbps). Under utopian conditions, the protocol overhead typically results in a limited bandwidth of about 3.4 megabytes per second (Mbps) of unidirectional connectivity. Using 802.11g technology under the best of conditions, a full length digital video disc ("DVD") movie of about 4.7 gigabytes would require approximately twenty-three (23) minutes to download. In other than utopian conditions, the modulation scheme used by the 802.11 g technology would often lead to a significantly longer download time. 802.11g operates in and is compatible with the 2.4 gigahertz ("GHz") Industry Scientific and Medical ("ISM") band.

Bluetooth is a short-range RF technology that does not require line-of-sight positioning of the communicating units. When a user activates a Bluetooth-enabled unit, the unit instantly scans for another enabled unit within the immediate vicinity. Once such a unit is located, the units establish small networks between each other and exchange address information without further involvement by the user. Bluetooth offers data transfer at up to 723.2 kilobits per second ("Kbps") in half-duplex mode and 433.9 Kbps in full-duplex mode, i.e., a mode in which data can be simultaneously sent and received. Bluetooth also operates in the 2.4 GHz ISM band.

Home RF is the most undeveloped of the short-range RF technologies. Initially created by a consortium to provide a standard for inexpensive data and voice communication to be used in the home, the Home RF technology is not widely used at this time. Home RF operates in the 2.45 GHz range of the ISM band.

The ISM frequency band is unlicensed and widely available for use. As such, the 802.11g, Bluetooth and Home RF technologies operating in the unlicensed band are vulnerable to interference from various wireless devices that can operate in the same environment, for example, cordless phones, microwave ovens and wireless video transmitters. This interference may result in performance degradation.

Wireless data transmission using RF technologies is negatively impacted by limited bandwidth and interference caused by the technologies' operation in the 2.45 GHz ISM band.

### SUMMARY OF THE INVENTION

The present invention is a method and system for transmitting data from a base apparatus having a base receiver and a laser to a target device including a target apparatus having a target transmitter and a photodetector. The target transmitter communicates the presence of the target apparatus to the base receiver, thereby establishing a communication uplink between the target apparatus and the base apparatus. The base microprocessor enables a laser to emit a laser beam which is aimed at the target device's photodetector, and a communication downlink is established between the base apparatus and the target apparatus via the laser beam and photodetector. Data is then transmitted from the base apparatus to the target apparatus via the communication downlink.

In one form of the present invention, the target device utilizes a low-speed wireless data connection to communicate the presence of the photodetector to the base receiver. Upon receipt of this communication, the base microprocessor enables a laser pointing mechanism capable of positioning the base structure's laser so that the emitted laser beam makes contact with the target device's photodetector, at which time a communication downlink is established between the photodetector and the laser beam. Data is then transmitted from the laser to the photodetector via the laser beam.

In another form of the present invention, a reflective surface is movably attached to the base structure and the laser generates a laser beam that illuminates the reflective surface. The microprocessor instructs a commercial laser based steering system to adjust the reflective surface until the laser communicates with the photodetector via the laser beam, at which time a communication downlink is established between the photodetector and the laser by way of the reflective surface and the laser beam. Data is then transmitted from the laser to the photodetector via the laser beam.

In another form of the present invention, a base apparatus includes a base receiver, a laser that emits a laser beam, a laser pointing mechanism capable of steering the laser beam, and a base microprocessor. The target device includes a target apparatus, and the target apparatus includes a target transmitter, a primary photodetector, multiple secondary photodetectors and a target microprocessor. The primary photodetector is positioned in a location relative to the secondary photodetectors. The target transmitter communicates the presence of the target apparatus to the base receiver, establishing a communication uplink between the target apparatus and the base apparatus. The base microprocessor then activates the laser to emit a laser beam and enables the laser to utilize the laser beam to locate either the target apparatus' primary photodetector or any of the multiple secondary photodetectors. Upon the base's location of the primary photodetector, a communication downlink is established between the primary photodetector and the laser. Data is then transmitted via the laser beam to the primary photodetector. If one of the secondary photodetectors is located before the laser beam locates the primary photodetector, the target transmitter uses the communication uplink to transmit coordinate information regarding the secondary photodetector to the base receiver. If at least two photodetectors are located by the laser beam, the base microprocessor has enough coordinate information to compute a transform mapping of the base apparatus' laser pointing mechanism to the target apparatus' coordinate field. The base microprocessor utilizes the transform mapping to instruct the laser pointing mechanism to locate the primary photodetector. A communication downlink is then established between the base apparatus and the target apparatus, and data is transmitted from the laser to the primary photodetector via the laser beam.

In another form of the present invention, a reflective surface is movably attached to the base structure and the laser generates a laser beam, which illuminates the reflective surface. The base microprocessor instructs a laser based steering system to adjust the reflective surface until the laser is in communication with the primary photodetector via the laser beam, at which time a communication downlink is established between the primary photodetector and the laser. Data is then transmitted from the laser to the primary photodetector via the laser beam. If one of the secondary photodetectors is located before the laser beam locates the primary photodetector, the target transmitter uses the communication uplink to transmit coordinate information regarding the secondary photodetector to the base receiver. If at least two photodetectors are located by the laser beam, the base microprocessor has enough coordinate information to compute a transform mapping of the base apparatus' laser based steering system to the target apparatus' coordinate field. The base microprocessor utilizes the transform mapping to instruct the laser based steering system to locate the primary photodetector, at which time a communication downlink is established between the base apparatus and the target apparatus. Data is then transmitted through the laser beam to the primary photodetector from the laser.

The present invention provides advantages to both the consumer and the provider of information services. Any structure under which a vehicle may be parked and that is adapted to include a network connection may provide information services to the vehicle parked beneath the structure. For example, Gas Station X may adapt its multiple overhangs to include a connection to Gas Station X's computer network. Gas Station X may also have a license to distribute DVD movies over its network to Gas Station X's consumers. As a consumer fills her automobile gas tank under one of Gas Station X's overhangs, the consumer may enter Gas Station X and tell the Station's attendant to download Movie X to the consumer's automobile. The present invention enables the attendant to transmit Movie X from the computer network to the consumer's automobile. Using the present invention, the consumer may download one (1) 4.7 gigabyte DVD movie at speeds of 100 Mbps to 10 Gbps from Gas Station X. Assuming that it takes the consumer an average of five (5) minutes to fill up her automobile, it can be seen that an enormous amount of data may be transmitted to the consumer's automobile during the consumer's gas stop. Indeed, much more data may be transmitted with the use of the present invention than with the use of other wireless technologies, e.g., Bluetooth, which is capable of transferring data at up to 723.2 Kbps and 802.11g, which is capable of transmitting data at up to 54 Mbps.

DVD movies are not the only form of data that can be transmitted using the methodology of the present invention. Musical data may be transmitted using the present invention as well. In the above-identified manner, Gas Station X may have a license to distribute digital music. Instead of the consumer going from Gas Station X to her local music store, the consumer could pay to have Gas Station X's attendant use the system of the present invention to transmit Artist X's latest musical work in CD or MP3 format, for example, to the consumer's automobile as the consumer fills up her automobile tank.

In addition to DVD movies and musical CDs, other types of information for which consumers may desire are available to the user of the present invention, e.g., travel information (including electronic maps and hotel information), stock quotes, the latest news, e-mail, etc. The consumer of this information benefits from the efficiency provided by the use of the present invention. Most consumers can not do too many things while either pumping gas or waiting for her gas to be pumped. By doing little more than spending a few minutes at the gas pump, the present invention allows the consumer to receive transmitted data, which the consumer can later use and enjoy. The use of the present invention allows the consumer to cut time consuming events out of a day's time, for example, going to a movie rental store to rent or buy Movie X, going to a music store to rent or buy Artist X's CD, and sitting down at the computer to check her e-mail or stock prices. The present invention, if used to transmit travel information to the consumer, could serve as in invaluable tool to frequent travelers. When the consumer stops to gas up her vehicle on the way to a particular destination, the consumer can have a map of that destination transmitted to her automobile along with a listing of pertinent hotels and restaurants in the destination.

### BRIEF DESCRIPTION OF THE DRAWINGS

The above-mentioned and other features and objects of this invention, and the manner of attaining them, will become more apparent and the invention itself will be better understood by reference to the following description of an embodiment of the invention taken in conjunction with the accompanying drawings, wherein:
Figure 1 is a partially schematic perspective view of the base structure and vehicle used by the present invention.
Figure 2 is a partially schematic perspective view of a first embodiment of the method and system of the present invention.
Figure 3 is a partially schematic perspective view of a second embodiment of the method and system of the present invention.
Figure 4 is a top plan view of an embodiment of a target apparatus having a primary photodetector and multiple secondary photodetectors.
Figure 5 is a partially schematic perspective view of a third embodiment of the method and system of the present invention.
Figure 6 is a partially schematic perspective view of a fourth embodiment of the method and system of the present invention.
Figure 7 is a partially schematic perspective view of a fifth embodiment of the method and system of the present invention.
Corresponding reference characters indicate corresponding parts throughout the several views. Although the drawings represent embodiments of the present invention, the drawings are not necessarily to scale and certain features may be exaggerated in order to better illustrate and explain the present invention. The exemplifications set out herein illustrate embodiments of the invention in several forms and such exemplification is not to be construed as limiting the scope of the invention in any manner.

### DESCRIPTION OF INVENTION

The embodiment disclosed below is not intended to be exhaustive or limit the invention to the precise form disclosed in the following detailed description. Rather, the embodiment is chosen and described so that others skilled in the art may utilize its teachings.

In regards to the present invention, the terms "network", "local area network", "LAN", "wide area network" or "WAN" mean two or more computers connected in such a manner that messages may be transmitted between the computers. One type of LAN architecture is the "Ethernet." The Ethernet typically supports data transfer rates of at least ten (10) megabits per second. The newest version of the Ethernet, the Gigabit Ethernet, supports data rates of one (1) gigabit per second, i.e., 1,000 megabits per second.

The terms "personal digital assistant" or "PDA", as defined above, means any hand held, mobile device that combines one or more of the computing, telephone, fax, e-mail and networking features. The terms "wireless wide area network" or "WWAN" mean a wireless network that spans a large geographical area and serves as the medium for the transmission of data. The terms "wireless local area network" or "WLAN" mean a wireless network that spans a relatively small area and serves as the medium for the transmission of data. Oftentimes, a WWAN is a system of connected WLANS. In WLANs and WWANs, communication primarily occurs through the transmission of radio signals over analog, digital cellular, or personal communications service ("PCS") networks. Signals may also be transmitted through microwaves and other electromagnetic waves. At the present time, most wireless data communication takes place across cellular systems using second generation technology such as code-division multiple access ("CDMA"), time division multiple access ("TDMA"), the Global System for Mobile Communications ("GSM"), personal digital cellular ("PDC"), or through packet-data technology over analog systems such as cellular digital packet data ("CDPD") used on the Advance Mobile Phone Service ("AMPS").

Transmission Control Protocol/Internet Protocol ("TCP/IP") is one common communication protocol used to connect remote computers over LANs, WLANs, WANs and WWANs (e.g., the Internet). Communication protocols ensure that when computers (or machines and components attachable to a computer) are in communication with one another, they agree on the format of the data being transmitted between them. A protocol provides rules for defining the data format.

Asynchronous Transfer Mode ("ATM") is a technology used to transfer data over a network. The data is transmitted in packets of a fixed size. ATM creates a fixed route between the source and destination once data transfer begins.

In computer networks as described above, typically one or more computers operate as a "server", a computer with large storage devices such as hard disk drives and communication hardware to operate peripheral devices such as printers or modems. Other computers, termed "clients", provide a user interface so that users of computer networks can access the network resources, such as shared data files, common peripheral devices, and inter-client communication. Users activate computer programs or network resources to create "processes" which include both the general operation of the computer program along with specific operating characteristics determined by input variables and its environment.

The amount of data transferred over a network in a fixed amount of time is known as "bandwidth." For digital devices, bandwidth is typically measured in bits/bytes per second ("bps/Bps"). For analog devices, bandwidth is typically measured in cycles per second or hertz ("Hz"). "Prefix multipliers" are used to denote the amount of transmitted data, for example, the prefix multiplier of "kilo" or "K" in "Kbps" indicates that 10³ bits of data are transferred per second. In this way, 10 Kbps indicates that 10 X 10³ bits of data are transferred per second, or 10,000 bits. Other prefix multipliers include "mega" or "M" (denoting 10⁶ bits of data) and "giga" or "G" (denoting 10⁹ bits of data).

The acronym L.A.S.E.R. ("laser") stands for Light Amplification by Stimulated Emission of Radiation. A laser is a device that produces and emits a concentrated and highly directional beam of light. Lasers are monochromatic in that they typically consist of one wavelength, and lasers work using light in the ultraviolet, infrared, and visible light spectrums. Continuous beam lasers emit a continuous beam of light while pulsed beam lasers emit light in single or multiple pulses.

IrDA-C ("IrDA Control") is an infrared standard from the Infrared Data Association ("IrDA"), a non-profit trade association that provides standards to ensure the quality and interoperability of infrared hardware. The term "infrared" denotes electromagnetic waves in the frequency range just below visible light that correspond to radiated heat. Infrared data communication typically involves two devices, a primary device and a secondary device. The primary device initiates communication by a process known as "discovery" in which the primary device determines if any devices are within its infrared range and available for communication. During the discovery process, the primary device communicates its "presence" to the secondary device, i.e., that the primary device is present and available for communication. If a device responds (the secondary device), the primary device attempts to establish a connection with the secondary device. After a connection has been established, applications on both sides of the connection are able to transfer data. The terms "uplink" and "downlink" are hereinafter defined as transmission paths for the communication of signals and data between a transmitting apparatus and a receiving apparatus. While an uplink is hereinafter described as providing low-speed data transmission and a downlink is hereinafter described as providing high-speed data transmission, in other embodiments of the present invention, the uplink may provide high-speed data transmission as well.

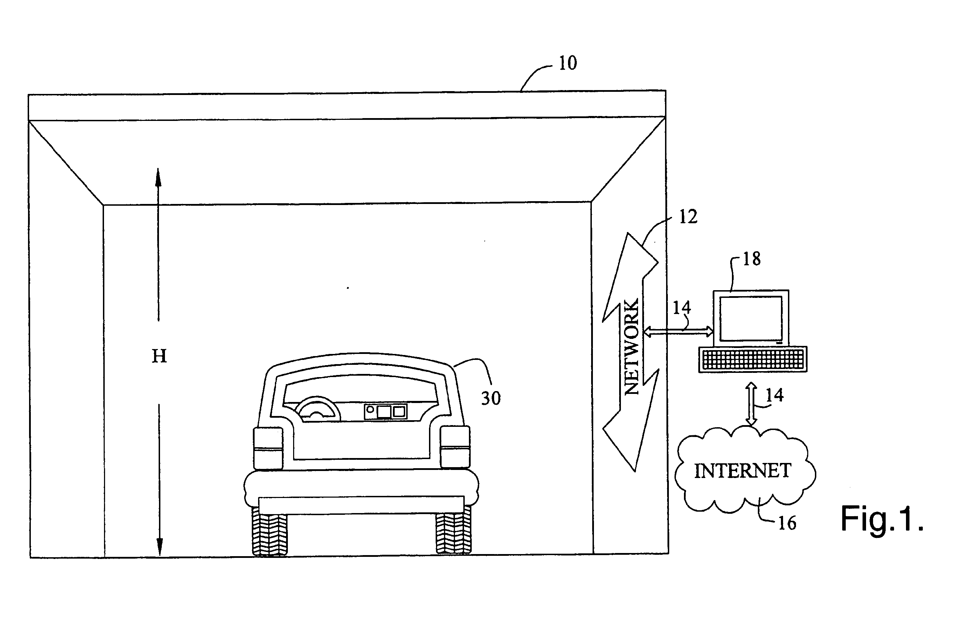

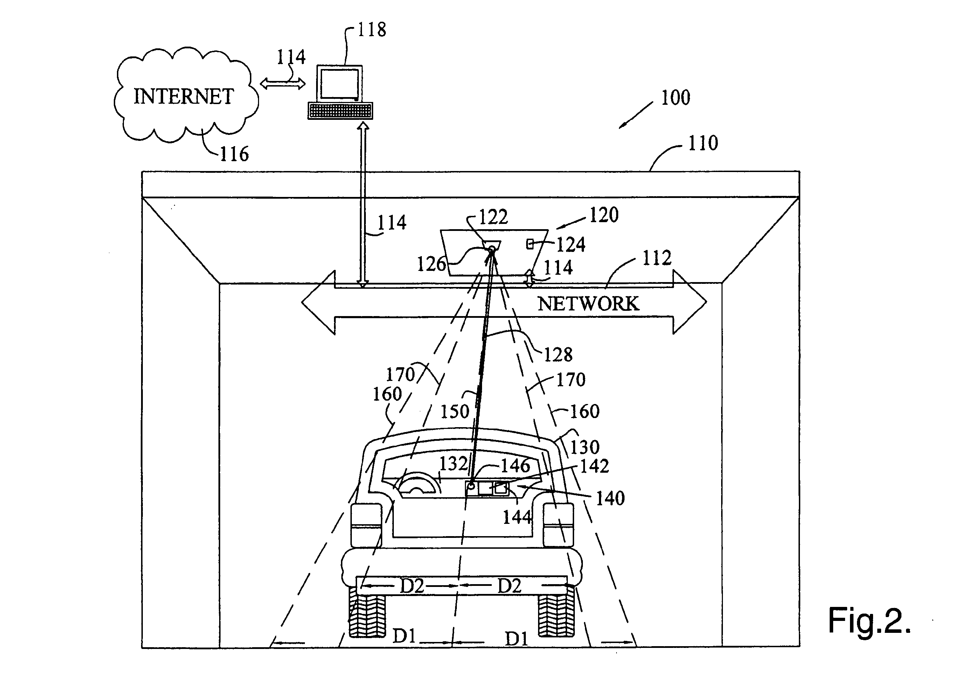

In the present invention, a method and system is provided for transmitting data from a base structure to a target device via a laser and a photodetector. The target device may be a vehicle, a PDA, a laptop computer or other form of device suitable for the installation of the target apparatus of the present invention. As shown in Fig. 1, vehicle 30 is located in a position relative to base structure 10. Base structure 10 may be any type of structure, including, but not limited to, a gas station overhang, a garage, a parking shelter, or a commercial building. Base structure 10 typically has a height H of at least five (5) meters and is adapted to include network 12. In one form of the present invention, network 12 has a Gigabit Ethernet architecture. Base structure computer 18 is in communication with both network 12 and globally accessible interchange network 16, e.g., the Internet, through transmission mediums 14. Transmission mediums 14 are physical interfaces, e.g., a modem, cable, bus, etc. between base structure computer 18 and globally accessible interchange network 16, between base structure computer 18 and network 12, and between base microprocessor 124 and network 12 (Fig 2).

System 100 of the present invention is shown in Fig. 2. System 100 includes base structure 110 and vehicle 130 located beneath base structure 110. In one form of the present invention, base structure 110 includes base apparatus 120 and vehicle 130 includes target apparatus 140. Base receiver 122 and base microprocessor 124 are coupled to base apparatus 120, and laser 126 is movably attached to base apparatus 120. Laser 126 includes a laser diode and is operatively associated with and controlled by base microprocessor 124. In one aspect of this form of the present invention, base apparatus 120 may include a laser pointing mechanism, with which laser 126 may be operatively associated so that its movements are controlled by base microprocessor 124. Base microprocessor 124 includes software adapted to enable base receiver 122 to communicate with target transmitter 142 and serves as an interface between base receiver 122 and network 112.

Target apparatus 140 is positioned on dashboard 132, the roof of vehicle 130, or in any position in which laser 126 may communicate with photodetector 146 via laser beam 128. Target apparatus 140 includes transmitter 142, photodetector 146 and target microprocessor 144, each coupled to target apparatus 140. Photodetector 146 may be any commercial high-speed photodetector, which can typically achieve a bandwidth of up to ten (10) Gbps. Target microprocessor 144 includes software adapted to enable target transmitter 142 to communicate with base receiver 122. Target microprocessor 144 supplies an interface between target transmitter 142 and the entertainment system (not shown) of vehicle 130. Base receiver 122 and target transmitter 142 may be any commercial, low-cost wireless transceiver. Embodiments of 122 and 142 could include, but are not limited to, IrDA-C, Bluetooth, ZigBee, ultra wide band (UWB), or 802.11 transceivers. Laser 126 may be any commercially available laser. Such commercial short-range transceivers and lasers were created for wireless keyboards and game-controller kinds of products and are inexpensive to obtain.

The method and system of the present invention works in the following manner. Referring to Fig. 2, vehicle 130 comes to a rest in a position relative to base structure 110. The most central position in which vehicle 130 may be located is nominal position 150 (represented by a dotted line), i.e., directly beneath base receiver 122. At nominal position 150, look angle *theta* (measured using laser 126 as the vertex of the look angle) is 0° (zero degrees). The look angle is the window in which vehicle 130 must be positioned in order for the present invention to be operational.

In one embodiment of the present invention, target transmitter 142 broadcasts an IrDA data communication message to base receiver 122 informing base receiver 122 that target transmitter 142 wishes to communicate. In broadcasting this message, target transmitter 142 communicates the presence of target apparatus 140 to base receiver 122. Target transmitter 142 and base receiver 122 are capable of communicating across a distance of five (5) meters with look angle *theta* of +/- 15° (fifteen degrees). Different hardware configurations may have different look angles and different height parameters. Assuming that base structure 110 has height H of five (5) meters, target transmitter 142 and base receiver 122 may communicate with each other through a IrDA data connection as long as vehicle 130 is within about 1.3 meters in any direction (D₁) about nominal position 150. A first communication area relative to nominal position 150 that impacts the rate of data transmission is low speed link area 160. Low speed link area 160 is the area about nominal position 150 spanning D₁ (1.3 meters) in any direction. Any communication between target transmitter 142 and base receiver 122 in low speed link area 160 may have a bandwidth of up to seventy-five (75) Kbps in this embodiment.

When target transmitter 142 communicates the presence of target apparatus 140 to base receiver 122, a communication uplink is established between target apparatus 140 and base apparatus 120. In one form of this embodiment, laser 126 is operatively associated with a laser pointing mechanism. A laser pointing mechanism is herein defined as any mechanism, system or device, currently or later known in the art, that is capable of aiming lasers. Such laser pointing mechanisms are commercially available with positional accuracy of a few arcsecs. An arcsec is a unit of measure that represents 1/3600 of a degree. The laser pointing mechanism is controlled by base microprocessor 124. Base microprocessor 124 activates laser 126 to emit laser beam 128 and the laser pointing mechanism steers laser 126 in the X and Y directions, enabling laser beam 128 to locate photodetector 146. The X and Y directions are defined as horizontal and vertical directions that align with either the X or Y axis. The X axis is the main horizontal axis in the Cartesian Coordinate System and the Y axis is the main vertical axis in the Cartesian Coordinate System. When photodetector 146 is illuminated by laser beam 128, target transmitter 142 communicates to base receiver 122 via the communication uplink that laser 126 has located and is in communication with photodetector 146. A communication downlink is then established between laser 126 and photodetector 146 via laser beam 128. After the communication downlink is established, data is transmitted via laser beam 128 at speeds of 100Mbps to 10 Gbps.

Because base structure computer 118 is in communication with globally accessible interchange network 116, the transferred data may be any type of data accessible to the user of computer 118, i.e., musical data, graphical data, financial data, news data, etc. The data is downloaded from globally accessible interchange network 116 to base structure computer 118 via transmission medium 114 and then uploaded to network 112. The data is then downloaded from network 112 and, as described above, transmitted to photodetector 146 by way of transmission medium 114, laser 126 and laser beam 128. Data may also be downloaded directly from computer 118 or network 112 if the data is local data and not data downloaded from globally accessible interchange network 116. The exemplary embodiment uses TCP/IP as the communication protocol to transmit the data over networks 112, 116. ATM technology may be used in the alternative. Upon completion of the data transfer, vehicle 130 is driven away and base receiver 122 begins to listen for IrDA-C broadcast messages from other vehicles.

Target apparatus 140 may also include power control circuitry that enables target apparatus 140 to conserve power by entering a low power state between data transmissions. A low power state may be any power state that enables target apparatus 140 to conserve power so that it does not drain the battery of vehicle 130 while waiting awaiting data transmissions. For example, after data has been transmitted from base apparatus 120 to target apparatus 140, the power control circuitry places target transmitter 142 and target microprocessor 144 into a low power state while maintaining power to photodetector 146. In its low power state, target apparatus 140 waits for base apparatus 120 to signal that more data is available for transmission. Base receiver 122 uses laser 126 to generate a laser beam which is directed at photodetector 146. When laser beam 128 is detected by photodetector 146, photodetector 146 alerts the power control circuitry to enter a fully operational power state. Target microprocessor 144 then enables target transmitter 142 to establish a communication uplink between base receiver 122 and target transmitter 142. Target transmitter 142 communicates to base receiver 122 via the communication uplink that laser 126 has located and is in communication with photodetector 146 and a communication downlink is established between laser 126 and photodetector 146 via laser beam 128. Data is then transmitted via laser beam 128.

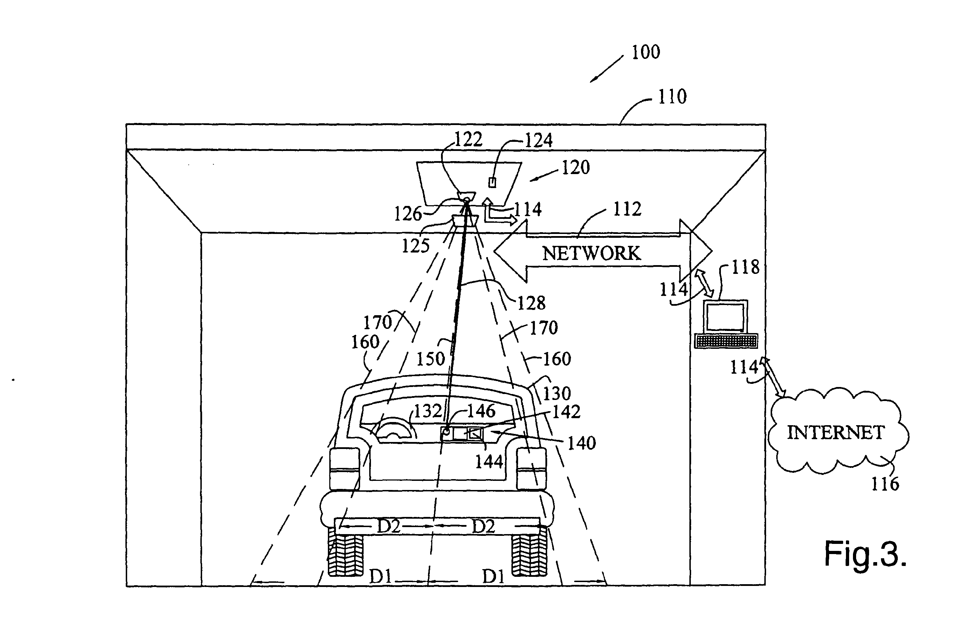

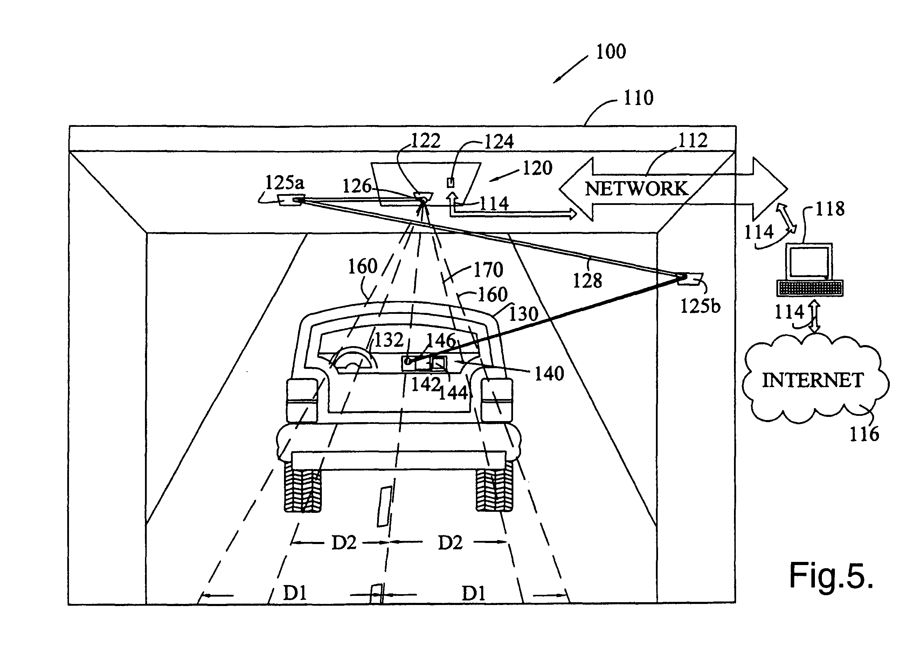

In another embodiment of the present invention, shown in Fig. 3, base structure 110 includes base apparatus 120 located in a position relative to base structure 110 and reflective surface 125 is movably attached to base structure 110. Reflective surface 125 may be any material that is capable of reflecting light, e.g., a mirror. There are a number of high accuracy mirrors in the industry, including MicroElectroMechanical Systems ("MEMs") mirrors. Although this embodiment of the present invention describes the use of one reflective surface, more than one reflective surface may be used to perform the method of the invention as hereinafter described (Fig. 5).

The method and system of this embodiment of the present invention works in the following manner. Referring to Fig. 3, vehicle 130 comes to a rest in a position relative to base structure 110. The most central position in which vehicle 130 may be located is nominal position 150. Target transmitter 142 broadcasts a message to base receiver 122 informing base receiver 122 that target transmitter 142 wishes to communicate. In broadcasting this message, target transmitter 142 communicates the presence of target apparatus 140 to base receiver 122. Target transmitter 142 may send data to base receiver 122 as long as target transmitter 142 is in low speed link area 160. When target transmitter 142 communicates the presence of target apparatus 140 to base receiver 122, a communication uplink is established between target apparatus 140 and base apparatus 120. Base microprocessor 124 then activates laser 126 to emit laser beam 128. Base microprocessor 124 includes software containing instructions that enables microprocessor 124 to instruct a commercial laser based steering system to adjust the movements of reflective surface 125. The laser based steering system utilizes an algorithm to adjust reflective surface 125 in the X and Y directions until laser 126 is in communication with photodetector 146 via laser beam 128. Texas Instruments, Incorporated (12500 TI Boulevard, Dallas, Texas 75243-4136) has developed one such algorithm used in its Analog Micromirror™ Device (Micromirror is a registered trademark of Bede Scientific Instruments Limited, a United Kingdom corporation), a laser based steering system for in-office wireless communication.

Base microprocessor 124 software also includes instructions enabling base microprocessor's 124 memory to maintain the coordinates of photodetector 146 if target apparatus 140 communicates to base receiver 122 via the communication uplink that target apparatus 140 has entered a low power state. In this operational mode, when base apparatus 120 has data to transfer to target apparatus 140 as described above, base microprocessor 124 can recall the coordinates of photodetector 146 and moveably adjust either laser 126 or reflective surface 125 until laser beam 128 is aimed at photodetector 146, thus signaling target apparatus 140 that data is available for transmission.

As mentioned above, a first area of communication that exists relative to nominal position 150 is low speed link area 160. Low speed link area 160 is the area about nominal position 150 spanning D₁ (1.3 meters) in any direction. Any communication between target transmitter 142 and base receiver 122 in low speed link area 160 may have a bandwidth of up to seventy-five (75) Kbps in this embodiment. In order for the communication downlink between laser 126 and photodetector 146 to be established at a bandwidth of more than seventy-five (75) Kbps, look angle *theta* should be +/- five (5) degrees in the exemplary embodiment. Accordingly, assuming that base structure 110 has height H of about five (5) meters, laser 126 and photodetector 146 may establish a communication link greater than seventy-five (75) Kbps as long as vehicle 130 is within a second communication area about nominal position 150, high-speed link area 170. High-speed link area 170 is the area about nominal position 150 spanning in any direction D₂ (0.44 meters) about nominal position 150 in which laser 126 and photodetector 146 may communicate at a bandwidth of greater than seventy-five (75) Kbps.

Again referring to Fig. 3, when laser beam 128 is detected by photodetector 146, target transmitter 142 communicates to base receiver 122 via the communication uplink that laser 126 has located and is in communication with photodetector 146. As described above, data may be transmitted via the communication downlink established between laser 126 and photodetector 146 at speeds of 100 Mbps to ten (10) Gbps as long as photodetector 146 is in high-speed link area 170. After the communication link has been established between laser 126 and photodetector 146, data is downloaded from globally accessible interchange network 116 to base structure computer 118 via transmission medium 114 and then uploaded to network 112. The data is then downloaded from network 112 to photodetector 146 by way of transmission medium 114, laser 126, reflective surface 125 and laser beam 128. Data may also be downloaded directly from computer 118 or network 112 if the data is local data and not data downloaded from globally accessible interchange network 116. Upon completion of the data transfer, vehicle 130 is driven away and base receiver 122 begins to listen for IrDA-C broadcast messages from other vehicles.

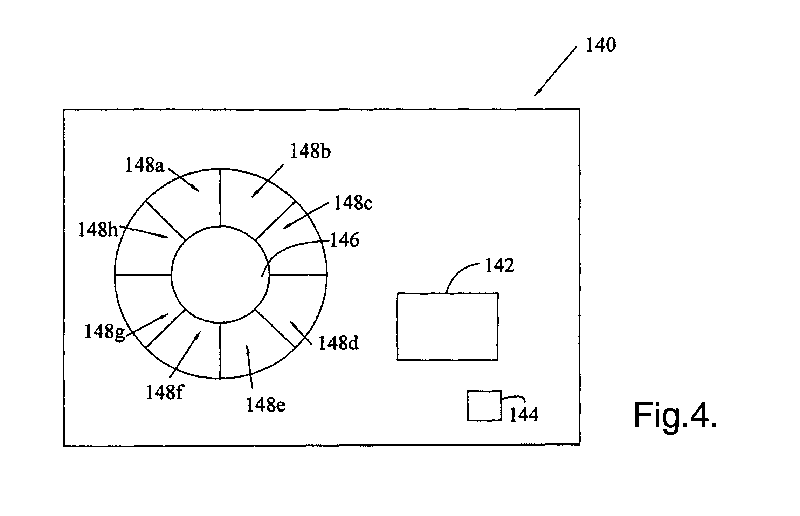

Target apparatus 140 is shown in Fig. 4 as including target transmitter 142, target microprocessor 144, primary photodetector 146 and multiple secondary photodetectors 148a, 148b, 148c, 148d, 148e, 148f, 148g, 148h ("148a - h"), which surround primary photodetector 146. The size and number of secondary photodetectors 148a - h may vary depending on the specifications desired by the party implementing the present invention. Primary photodetector 146 is a high-speed photodetector and is positioned in a location relative to secondary photodetectors 148a - h. The method and system of this component of the present invention works in the following manner. Again referring to Fig. 3, vehicle 130 comes to a rest in a position relative to base structure 110. Target apparatus 140 broadcasts its presence to base receiver 122 via target transmitter 142 on a periodic basis or when requested by the operator of target apparatus 140. Upon receipt of this broadcast message, a communication uplink is established between target apparatus 140 and base apparatus 120. Base microprocessor 124 activates laser 126 to emit laser beam 128 and sweeps laser beam 128 across high-speed link area 170 in a search pattern, e.g., a rastering pattern in the Cartesian Coordinate System, a spiral pattern in the Polar Coordinate System (the Polar Coordinate System is based on an angle and a radius), or any pattern that enables photodetectors 146 and 148a - h to be illuminated by laser beam 128. The sweeping motion of laser beam 128 may be accomplished through various means, including, but not limited to, a laser pointing mechanism or a laser based steering system.

If laser beam 128 illuminates photodetector 146, target transmitter 142 uses the communication uplink to communicate to base receiver 122 that laser 126 has located and is in communication with photodetector 146. A communication downlink is then established between laser 126 and primary photodetector 146 by way of reflective surface 125 and laser beam 128.

When one of multiple secondary photodetectors 148a - h is illuminated by laser beam 128 (e.g., secondary photodetector 148b), target transmitter 142, using the center of primary photodetector 146 as the origin of target apparatus' 140 coordinate field, transmits a message to base receiver 122 via the communication uplink that includes the coordinates of illuminated secondary photodetector 148b. Base microprocessor 124 records the arrival time of the message as well as the current parameters used by base microprocessor 124 in controlling the laser pointing mechanism. Having located secondary photodetector 148b, base microprocessor 124 may condense the search area boundaries and continue to sweep laser beam 128 until either primary photodetector 146 or another of secondary photodetectors 148a - h (e.g., secondary photodetector 148e) is illuminated.

When secondary photodetector 148e is illuminated, target transmitter 142 sends a message to base receiver 122, the message including the coordinates of secondary photodetector 148e. Now that base receiver 122 has received two sets of time-stamped coordinates - the coordinates of secondary photodetectors 148b and 148e - base microprocessor 124 has enough information to compute an approximate transform mapping of base apparatus' 120 laser pointing mechanism to target apparatus' 140 coordinate field. Base microprocessor 124 then uses the transform mapping to command laser beam 128 to illuminate the origin of target apparatus' 140 coordinate field, i.e., the center of primary photodetector 146, and a communication downlink has been established.

After the communication downlink has been established between laser 126 and primary photodetector 146, data is downloaded from globally accessible interchange network 116 to base structure computer 118 via transmission medium 114 and then uploaded to network 112. The data is then downloaded from network 112 and transmitted to primary photodetector 146 by way of transmission medium 114, laser 126, reflective surface 125 and laser beam 128. Data may also be downloaded directly from computer 118 or network 112 if the data is local data and not data downloaded from globally accessible interchange network 116. In the exemplary embodiment, the data is transmitted from laser 126 to primary photodetector 146 at speeds of 100 Mbps to ten (10) Gbps as long as primary photodetector 146 is in high-speed link area 170. Upon completion of the data transfer, vehicle 130 is driven away and base receiver 122 begins to listen for IrDA-C broadcast messages from other vehicles. If during the course of the communication session, laser beam 128 illuminates another of multiple secondary photodetectors 148a - h (e.g., secondary photodetector 148c) because either vehicle 130 moves or laser beam 128 drifts, target transmitter 142 immediately transmits a message to base receiver 122 with the coordinates of secondary photodetector 148c. Base microprocessor 124 uses this information to refine its transform mapping and again commands the laser based steering system to locate primary photodetector 146. Multiple secondary photodetectors 148a - h may be used in any embodiment of the present invention.

In yet another form of the present invention shown in Fig. 5, vehicle 130 is no longer beneath base structure 110 and is in a moving position relative to base structure 110. Base structure 110 includes multiple reflective surfaces 125A, 125B. Target apparatus 140 includes primary photodetector 146 and multiple secondary photodetectors 148a - h, and primary photodetector 146 is positioned in a location relative to the location of secondary photodetectors 148a - h. After target transmitter 142 communicates the presence of target apparatus 140 to base receiver 122, a communication uplink is established between target apparatus 140 and base apparatus 120. Base microprocessor 124 then activates laser 126 to emit laser beam 128 and instructs a laser based steering system to adjust laser beam's 128 incident angle upon reflective surface 125A so that reflected beam 128 illuminates reflective surface 125B, which in turn illuminates either primary photodetector 146 or one of secondary photodetectors 148a - h via laser beam 128. If one of secondary photodetectors 148a - h is illuminated before laser beam 128 communicates with primary photodetector 146, target transmitter 142 uses the communication uplink to transmit coordinate information regarding the illuminated secondary photodetector to base receiver 122, as described above. If at least two photodetectors 146, 148a - h are illuminated by the laser beam 128, base microprocessor 124 receives enough coordinate information to compute a transform mapping of base apparatus' 120 laser based steering system to target apparatus' 140 coordinate field. Base microprocessor 124 then utilizes the transform mapping to instruct the laser based steering system to locate the center of primary photodetector 146.

When primary photodetector 146 is illuminated by laser beam 128, target transmitter 142 utilizes the communication uplink to communicate to base receiver 122 that laser 126 has located and has established a communication downlink with primary photodetector 146. As long as primary photodetector 146 is in high-speed link area 170, the system of the present invention utilizes the communication link to transmit data from laser 126 to primary photodetector 146 at speeds of 100 Mbps to 10 Gbps.

As vehicle 130 continues to move, the position of target apparatus 140 changes. When the position of target apparatus 140 changes, laser beam 128 drifts off of the primary photodetector 146 and illuminates one of secondary photodetectors 148a - h surrounding primary photodetector 146. When this occurs, target transmitter 142 sends illuminated secondary photodetector's 148a - h position to base receiver 122. Base microprocessor 124 then updates its transform mapping of target apparatus' 140 coordinate field and commands the laser pointing mechanism to make a corrective motion in the direction of primary photodetector 146. When primary photodetector 146 is illuminated, target transmitter 142 sends a message to base receiver 122 informing it that laser 126 is in communication with primary photodetector 146. This process is iterative in nature as long as vehicle 130 remains in motion within high speed link area 170.

Once the communication downlink has been established between laser 126 and primary photodetector 146, data is downloaded from globally accessible interchange network 116 to base structure computer 118 via transmission medium 114 and then uploaded to network 112. The data is then downloaded from network 112 and transmitted to primary photodetector 146 by way of transmission medium 114, laser 126, reflective surfaces 125A, 125B and laser beam 128. Data may also be downloaded directly from computer 118 or network 112 if the data is local data and not data downloaded from globally accessible interchange network 116. Upon either the completion of the data transfer or the inability of laser 126 to further communicate with primary photodetector 146, vehicle 130 is driven away and base receiver 122 begins to listen for IrDA-C broadcast messages from other vehicles. These steps are continually repeated as vehicle 130 moves until a communication downlink is established between laser 126 and primary photodetector 146 via laser beam 128. If no direct communication is able to be established between laser 126 and primary photodetector 146, then vehicle 130 moves along with no data having been transmitted.

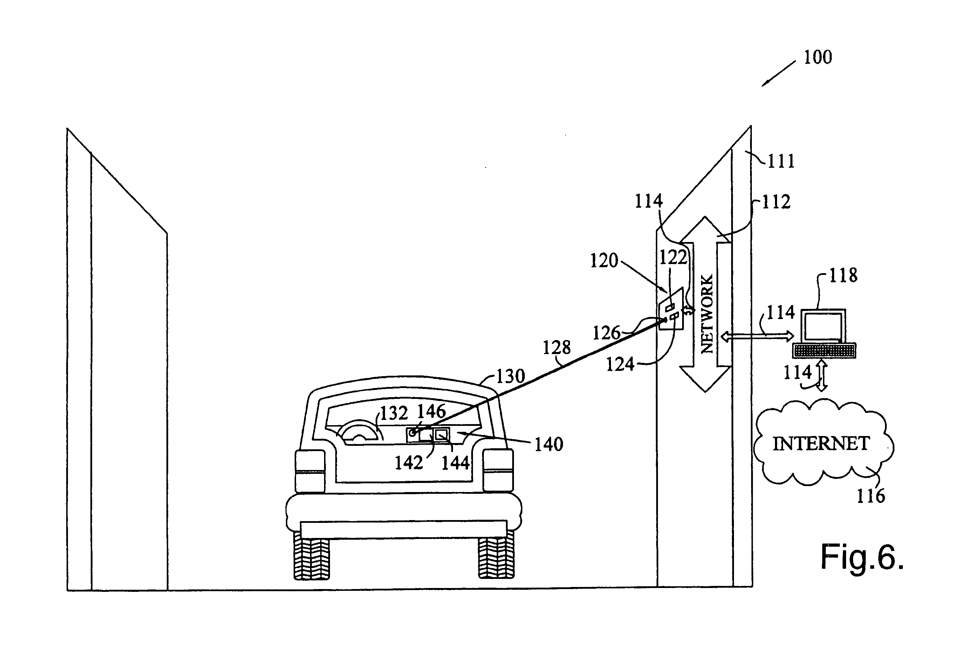

In another embodiment of the present invention shown in Fig. 6, the method and system of the present invention works in the following manner. Vehicle 130 comes to a rest in a position relative to non-overhead base structure 111. Target transmitter 142 broadcasts an IrDA data communication message to base receiver 122 informing base receiver 122 that target transmitter 142 wishes to communicate. In broadcasting this message, target transmitter 142 communicates the presence of target apparatus 140 to base receiver 122. A communication uplink is established between target apparatus 140 and base apparatus 120. Target transmitter 142 and base receiver 122 are capable of communicating across a distance of five (5) meters.

After a communication uplink has been established between target apparatus 140 and base apparatus 120, base microprocessor 124 activates laser 126 to emit laser beam 128 and enables laser 126 to locate photodetector 146 by aiming laser beam 128 in the X and Y directions. When laser beam 128 is detected by photodetector 146, target transmitter 142 communicates to base receiver 122 that laser 126 has located and is in communication with photodetector 146. A communication downlink is established between target apparatus 140 and base apparatus 120 via laser 126 and photodetector 146 via laser beam 128. After the communication downlink is established, data is downloaded from globally accessible interchange network 116 to base structure computer 118 via transmission medium 114 and then uploaded to network 112. The data is then downloaded from network 112 to photodetector 146 by way of transmission medium 114, laser 126, reflective surface 125 and laser beam 128. Data may also be downloaded directly from computer 118 or network 112 if the data is local data and not data downloaded from globally accessible interchange network 116. Upon completion of the data transfer, vehicle 30 is driven away and base receiver 122 begins to listen for IrDA-C broadcast messages from other vehicles.

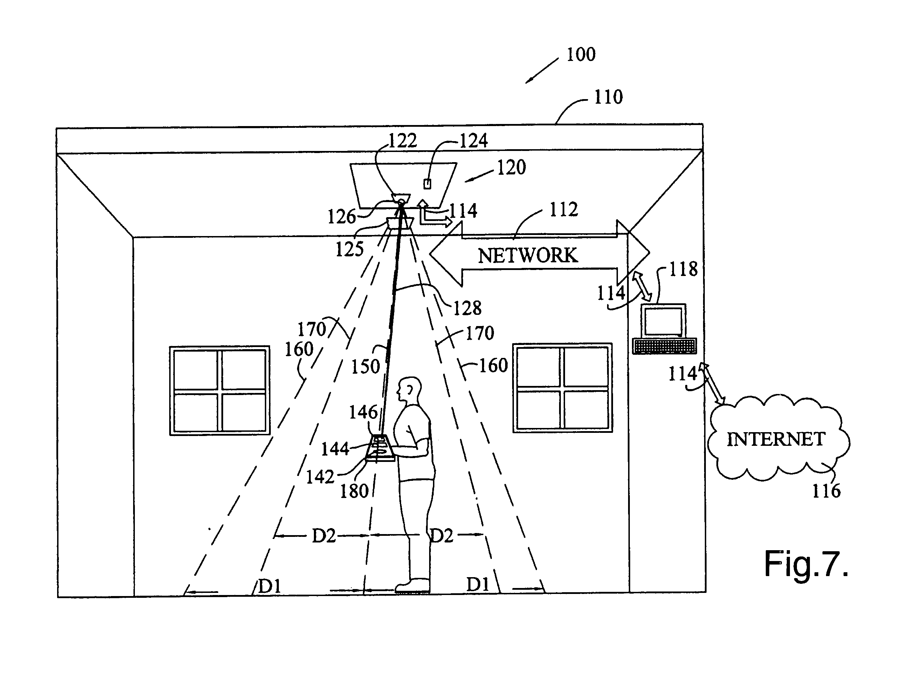

In still another form of the present invention, target apparatus 140 is suitable for use in a PDA. Shown in Fig. 7, base structure 110, a commercial building, includes base apparatus 120 located in a position relative to base structure 110 and reflective surface 125 is movably attached to base structure 110. PDA 180 is located in a position relative to base structure 110. The most central position in which PDA 180 may be located is nominal position 150. Target transmitter 142 broadcasts a message to base receiver 122 informing base receiver 122 that target transmitter 142 wishes to communicate. In broadcasting this message, target transmitter 142 communicates the presence of target apparatus 140 to base receiver 122. A communication uplink is established between target apparatus 140 and base apparatus 120. Target transmitter 142 and base receiver 122 may communicate as long as target transmitter 142 is in low speed link area 160. After a communication uplink has been established between target apparatus 140 and base apparatus 120, base microprocessor 124 activates laser 126 to emit laser beam 128 and instructs a laser based steering system to adjust reflective surface 125 in the X and Y directions until laser 126 is in communication with photodetector 146 via laser beam 128.

When laser beam 128 is detected by photodetector 146, target transmitter 142 communicates to base receiver 122 via the communication uplink that laser 126 has located and is in communication with photodetector 146. The established communication downlink between laser 126 and photodetector 146 has a bandwidth of 100 Mbps to ten (10) Gbps as long as photodetector 146 is in high-speed link area 170.

After the communication link has been established between laser 126 and photodetector 146, data is downloaded from globally accessible interchange network 116 to base structure computer 118 via transmission medium 114 and then uploaded to network 112. The data is then downloaded from network 112 to photodetector 146 by way of transmission medium 114, laser 126, reflective surface 125 and laser beam 128. Data may also be downloaded directly from computer 118 or network 112 if the data is local data and not data downloaded from globally accessible interchange network 116. Upon completion of the data transfer, the user of PDA 180 may leave and go elsewhere and base receiver 122 begins to listen for IrDA-C broadcast messages from other target devices.

While this invention has been described as having an exemplary design, the present invention may be further modified within the spirit and scope of this disclosure. This application is therefore intended to cover any variations, uses, or adaptations of the invention using its general principles. Further, this application is intended to cover such departures from the present disclosure as come within known or customary practice in the art to which this invention pertains.

## Claims

1. A method of transmitting data between a base structure (10, 110, 111) and a target device, the base structure including a base apparatus (120) and the target device including a target apparatus (140); the base apparatus having a base receiver (122) and a laser (126); the target apparatus having a target transmitter (142) and a photodetector (146), said method **characterized by** the steps of:
communicating the presence of the target apparatus to the base receiver;
activating the laser to emit a laser beam (128) and enabling the laser to locate the photodetector; and
establishing a communication downlink between the target apparatus and the base apparatus via the laser and the photodetector.

2. The method of Claim 1 **characterized in that** said communicating step includes a step of establishing a communication uplink between the target apparatus and the base apparatus.

3. The method of Claim 2 **characterized in that** said activating step includes a step of instructing a laser based steering system to adjust a reflective surface (125A, 125B) until the laser beam is in communication with the photodetector, the reflective surface movably attached to the base structure and in communication with the laser.

4. The method of Claim 2 **characterized in that** said activating step further includes a step of utilizing at least one of a laser pointing mechanism and a laser based steering system to steer the laser beam until the laser beam is in communication with the photodetector.

5. The method of Claim 2 **characterized in that** said establishing step further includes a step of transmitting data from the laser to the photodetector via the laser beam at rates of 100 Mbps to 10 Gbps.

6. The method of Claim 1 **characterized in that** the target device includes a vehicle (130).

7. The method of Claim 1 **characterized in that** the target device includes at least one of a hand held mobile device (180) and a laptop computer.

8. A method of transmitting data between a base structure (10, 110, 111) and a target device, the base structure including a base apparatus (120) and the target device including a target apparatus (140); the target apparatus having a target transmitter (142) and a primary (146) and multiple secondary (148a, 148b, 148c, 148d, 148e, 148f, 148g, 148h) photodetectors, the primary photodetector positioned in a location relative to the secondary photodetectors; the base apparatus having a base receiver (122) and a laser (126), said method **characterized by** the steps of:
communicating the presence of the target apparatus to the base receiver;
activating the laser to emit a laser beam (128) and enabling the laser to locate either the primary photodetector or at least one of the secondary, and then the primary, photodetectors; and
establishing a communication downlink between the target apparatus and the base apparatus via the laser and the primary photodetector.

9. The method of Claim 8 **characterized in that** the communicating step includes a step of establishing a communication uplink between the target apparatus and the base apparatus.

10. The method of Claim 9 **characterized in that** said activating step includes a step of communicating coordinate information to the base receiver regarding each secondary photodetector located by the laser.

11. The method of Claim 10 **characterized in that** said activating step includes a step of utilizing the coordinate information in instructing a laser based steering system to adjust a reflective surface (125A, 125B) until the laser beam is in communication with the primary photodetector, the reflective surface movably attached to the base structure.

12. The method of Claim 9 **characterized in that** said activating step further includes a step of utilizing the coordinate information in instructing a laser pointing mechanism to steer the laser beam until the laser beam is in communication with the primary photodetector.

13. The method of Claim 9 **characterized in that** said establishing step further includes a step of transmitting data from the laser to the primary photodetector via the laser beam at rates of 100 Mbps to 10 Gbps.

14. The method of Claim 8 **characterized in that** the target device includes a vehicle (130).

15. The method of Claim 8 **characterized in that** the target device includes at least one of a hand held mobile device (180) and a laptop computer.

16. A target apparatus (140) for use in a target device to receive data from a base apparatus (120) for use in a base structure (10, 110, 111), the base apparatus including a base receiver (122) and a laser (126) capable of emitting a laser beam (128); the target apparatus including a photodetector (146) located in a position relative to the base apparatus; the target apparatus **characterized by**:
a target transmitter (142) adapted to be coupled to the target apparatus;
a microprocessor (144) operatively associated with said target transmitter, said microprocessor including software adapted to enable said target transmitter to communicate the presence of the target apparatus to the base receiver; and
the photodetector operatively associated with said microprocessor and adapted to receive data transmitted from the base apparatus via the laser and laser beam.

17. The target apparatus of Claim 16 further **characterized by** multiple secondary photodetectors (148a, 148b, 148c, 148d, 148e, 148f, 148g, 148h), the primary photodetector positioned in a location relative to said secondary photodetectors.

18. The target apparatus of Claim 17 **characterized in that** said microprocessor includes software adapted to enable said target transmitter to communicate coordinate information to the base receiver, the coordinate information relating to any of said secondary photodetectors which detect the laser beam.

19. The target apparatus of Claim 16 **characterized in that** the base structure includes at least one reflective surface (125A, 125B) movably attached to the base structure and operatively associated with a laser based steering system.

20. The target apparatus of Claim 18 **characterized in that** said target apparatus includes power control circuitry enabling said microprocessor and the photodetector to enter a low power state.

21. A base apparatus (120) for use in a base structure (10, 110, 111) to transmit data to a target apparatus (140), the target apparatus including a target transmitter (142) and a photodetector (146), the base apparatus **characterized by**:
a base receiver(122) adapted to be coupled to the base structure;
a microprocessor (124) coupled to said base receiver; and
a laser (126) movably disposed relative to the base apparatus and enabled to emit a laser beam (128), said laser operatively associated with said microprocessor, said microprocessor having means for adjusting said laser so that the laser beam communicates with the photodetector.

22. The base apparatus of Claim 21 **characterized in that** the base structure includes at least one reflective surface (125A, 125B) movably attached to the base structure and operatively associated with a laser based steering system.

23. The base apparatus of Claim 21 **characterized in that** said microprocessor includes means for connecting to a network (112, 116).

24. The base apparatus of Claim 21 **characterized in that** said laser includes a laser diode.

25. The base apparatus of claim 21 **characterized in that** the photodetector is associated with coordinates describing the photodetector's location.

26. The base apparatus of Claim 25 **characterized in that** the base's microprocessor includes software and storage for enabling the microprocessor to maintain the coordinates.
